# EUROPÄISCHE PATENTANMELDUNG

(11) **EP 2 581 582 A1**
(43) Veröffentlichungstag der Anmeldung: **17.04.2013**
(21) Anmeldenummer: 12188090.0
(22) Anmeldetag: 11.10.2012
(51) Int. Cl.: F02B 29/04, B60K 11/04, F01P 3/18, F28F 9/26

(54) **Kühlervorrichtung und Verfahren zur Herstellung einer Kühlervorrichtung für ein Fahrzeug**

(30) Priorität: 11.10.2011 DE 102011084307
(71) Anmelder: Behr GmbH & Co. KG, 70469 Stuttgart (DE)
(72) Erfinder: Heine, Reinhard, 71397 Leutenbach (DE)
(74) Vertreter: Grauel, Andreas

(57) **Zusammenfassung**

Die vorliegende Erfindung betrifft eine Kühlervorrichtung (300) für ein Fahrzeug, die einen ersten Luftkühler (310) mit einem ersten Element einer Schiebesitz-Zapfenverbindung (340) und einem ersten Element einer Schnappverbindung (350) aufweist. Die Kühlervorrichtung (300) weist einen mit dem ersten Luftkühler (310) in Verbindung stehenden zweiten Luftkühler (320) mit einem zweiten Element der Schiebesitz-Zapfenverbindung (340) und einem zweiten Element der Schnappverbindung (350) auf, wobei die Elemente der Schnappverbindung (350) und die Elemente der Schiebesitz-Zapfenverbindung (340) derart ausgebildet sind, dass durch die Schnappverbindung (350) und die Schiebesitz-Zapfenverbindung (340) eine formschlüssige Verbindung der zwei Luftkühler (310, 320) herstellbar ist.

## Beschreibung

Die vorliegende Erfindung bezieht sich auf eine Kühlervorrichtung und ein Verfahren zur Herstellung einer Kühlervorrichtung insbesondere für ein Fahrzeug, die beispielsweise als Kühlmodul eingesetzt werden kann.

Eine Kühlervorrichtung, auch Kühlmodul genannt, für ein Fahrzeug mit Verbrennungsmotor kann einen Ladeluft-Luftkühler und einen Kühlmittel-Luftkühler aufweisen, die zu der Kühlervorrichtung verbunden werden können. Werden unterschiedliche Materialien für die Kühler, im folgenden auch schlicht Luftkühler genannt, wenn der Kühler als ein am Wärmetausch beteiligtes Fluid Luft verwendet, und Befestigungselemente zur Verbindung der Kühler verwendet, so ist es erforderlich den Toleranzausgleich und unterschiedliche Wärmeausdehnung zwischen den Materialien zu berücksichtigen. Dabei ist auf eine möglichst spielfreie Befestigung zu achten.

Es ist die Aufgabe der vorliegenden Erfindung eine verbesserte Kühlervorrichtung für ein Fahrzeug und ein verbessertes Verfahren zur Herstellung einer Kühlervorrichtung für ein Fahrzeug zu schaffen.

Diese Aufgabe wird durch eine Kühlervorrichtung sowie ein Verfahren gemäß den Hauptansprüchen gelöst. Vorteilhafte Weiterbildungen der Erfindung sind in den abhängigen Ansprüchen angegeben.

Der erfindungsgemäße Ansatz kann bei einer Kühlervorrichtung die aus zwei Luftkühlern besteht vorgesehen werden. Die beiden Luftkühler werden über zwei Verbindungen formschlüssig verbunden. Die eine Verbindung kann als Schiebesitz-Zapfenverbindung und die andere Verbindung kann als Schnappverbindung ausgeführt sein. Beiden Verbindungen ist gemeinsam, dass sie aus zwei Elementen bestehen, wobei je ein Element einer Verbindung an einem der Luftkühler, und das andere Element an dem anderen Luftkühler angeordnet ist. Das eine Element der Schiebesitz-Zapfenverbindung ist ausgebildet, um in das andere Element der Schiebesitz-Zapfenverbindung, das als Aufnahme für das eine Element der Schiebesitz-Zapfenverbindung dient, einzugreifen. Analog ist bei der Schnappverbindung das eine Element der Schnappverbindung ausgebildet, um in das als Aufnahme dienende andere Element der Schnappverbindung einzugreifen. Zur Herstellung der Kühlervorrichtung wird zuerst die Schiebesitz-Zapfenverbindung hergestellt, um dann die beiden Luftkühler um diese Verbindung derart zu bewegen, dass sich die Schnappverbindung schließt und somit die beiden Luftkühler zu einer Kühlervörrichtung zusammenfügen.

Vorteilhafterweise kann auf aufwendige Verbindungen durch Zusatzteile verzichtet werden und dadurch bedingt auch eine aufwendige Montage vermieden werden. Bei einer Ausführung komplett aus Kunststoffteilen entfällt der sonst notwendige Korrosionsschutz bei Metallhaftern, da aufgrund der Kunststoffteile keine Korrosionsprobleme auftreten. Der erfindungsgemäße Ansatz ermöglicht eine einfache Montage oder Demontage. Die Befestigung eines Ladeluft-Luftkühlers an einem Kühlmittel-Luftkühler kann ohne zusätzliche Befestigungselemente wie Halter, Bolzen, Schrauben, Nieten realisiert werden. Dies kann letztendlich zu einer kostengünstigen Befestigung des Ladeluft-Luftkühlers am Kühlmittel-Luftkühlers führen. Es ist möglich auf den Einsatz unterschiedlicher Materialien für die Luftkühler und die Befestigungselemente zu verzichten. Der Toleranzausgleich und die unterschiedliche Wärmeausdehnung der Kühler kann leichter berücksichtigt werden. Dabei kann auf eine möglichst spielfreie Befestigung geachtet werden.

Die vorliegende Erfindung schafft eine Kühlervorrichtung für ein Fahrzeug mit folgenden Merkmalen:
einem ersten Luftkühler mit einem ersten Element einer Schiebesitz-Zapfenverbindung und einem ersten Element einer Schnappverbindung; und
einem zweiten Luftkühler mit einem zweiten Element der Schiebesitz-Zapfenverbindung und einem zweiten Element der Schnappverbindung, wobei die Elemente der Schnappverbindung und die Elemente der Schiebesitz-Zapfenverbindung derart ausgebildet sind, dass durch die Schnappverbindung und die Schiebesitz-Zapfenverbindung eine formschlüssige Verbindung der zwei Luftkühler herstellbar ist.

Bei dem Fahrzeug kann es sich beispielsweise um einen Personenkraftwagen oder einen Lastkraftwagen handeln. Das Fahrzeug kann einen Verbrennungsmotor aufweisen. Mittels der Kühlvorrichtung für das Fahrzeug können Luft und Kühlmittel gekühlt werden. Die Kühlvorrichtung kann aus zwei Luftkühlern bestehen. Die zwei Luftkühler können als separate Bauteile ausgeführt sein. Die Luftkühler können als Wärmeübertrager genutzt werden. Die Luftkühler können die Umgebungsluft nutzen, d.h. es handelt sich um luftgekühlte Kühler. Ein Luftkühler kann entweder die Ladeluft kühlen, dann wird er als Ladeluft-Luftkühler bezeichnet oder ein Kühlmittel kühlen, dann wird er als Kühlmittel-Luftkühler bezeichnet. Unter einer Schiebesitz-Zapfenverbindung kann allgemein eine aus zwei Elementen bestehende Verbindung verstanden werden, bei der das eine Element als eine beispielsweise quaderförmige Nase ausgeformt ist, die in eine Aufnahme des anderen Elements eingeschoben werden kann. Das als Aufnahme fungierende andere Element ist als Passung für die quaderförmige Nase ausgeformt, wobei der feste Sitz im montierten Zustand als Schiebesitz konzipiert ist, d.h. die beiden Elemente lassen sich durch ineinanderschieben zusammenfügen. Unter einer Schnappverbindung kann allgemein eine Verbindung von zwei Elementen verstanden werden, die die Elastizität des Werkstoffes nutzt, um die zwei Elemente der Verbindung unter Formschluss zusammenfügbar zu machen. Das eine Element der Schnappverbindung kann als Fügeteil und das andere Element als Aufnahme für das Fügeteil realisiert sein. Das Fügeteil kann sich elastisch verformen und sich lösbar in der Aufnahme für das Fügeteil verhaken. Gemäß einer Ausführungsform der vorliegenden Erfindung kann eines der Elemente der Schiebesitz-Zapfenverbindung ein Zapfen mit seitlich je einer Fase sein. Das andere Element der Schiebesitz-Zapfenverbindung kann als Schiebesitz für den Zapfen ausgeformt sein. Unter einem Zapfen kann hierbei ein quaderförmiger Fortsatz des einen Luftkühlers verstanden werden. Unter einer Fase wird im Allgemeinen eine abgeschrägte Fläche, hier des Zapfen, verstanden. Diese Lösung hat den Vorteil, dass man ein gewisses Montagespiel beim Zusammenfügen erhält.

Zumindest einer der beiden Luftkühler kann derart ausgeformt sein, dass bei der formschlüssigen Verbindung zwischen den beiden Luftkühlern eine Kontaktfläche zum Verspannen des Zapfens gegenüber dem Schiebesitz entsteht. Unter einer Kontaktfläche kann im Allgemeinen der Kontakt zweier Körper verstanden werden. Die Kontaktfläche bietet den Vorteil, dass der Zapfen der Schiebesitz-Zapfenverbindung in der Aufnahme verspannt wird und so die Passung von einem Schiebesitz während des Fügeprozesses zu einer Presspassung im montierten Zustand werden kann.

Entsprechend einer Ausführungsform der vorliegenden Erfindung kann eines der Elemente der Schnappverbindung ein Schnapphaken sein. Das andere Element der Schnappverbindung kann als eine Aufnahme für den Schnapphaken ausgeformt sein. Der Schnapphaken kann eine spezifische Ausformung eines Fügeteiles sein. Diese Ausführungsform ist vorteilhaft, weil ohne zusätzliche Bauteile ein Formschluss erreichbar ist und die Verbindung sich auch leicht wieder lösen lässt.

Der Schnapphaken kann ausgebildet sein, um bei der formschlüssigen Verbindung auf Druck belastet zu werden. Alternativ kann der Schnapphaken ausgebildet sein, um auf Zug belastet zu werden. So lässt sich die erfindungsgemäße Ausführung an unterschiedliche Rahmenbedingungen des Materials und des Einbauortes anpassen.

Die Schiebesitz-Zapfenverbindung und die Schnapphakenverbindung können auf zwei sich gegenüberliegenden Seiten der Kühlervorrichtung angeordnet sein. Hierdurch kann die mechanische Belastung der beiden Verbindungen möglichst gering gehalten werden bei gleichzeitig optimalem Halt.

Gemäß einer Ausführungsform der vorliegenden Erfindung kann der erste Luftkühler als Kühlmlttel-Luftkühler und der zweite Luftkühler als Ladeluft-Luftkühler ausgeprägt sein. Dies bietet den Vorteil unterschiedliche luftgekühlte Kühler zu einer Kühlvorrichtung zu kombinieren.

Ferner können die beiden Luftkühler aus Kunststoff beschaffen sein. Dies kann den Korrosionsschutz vereinfachen bzw. komplett obsolet machen.

Bei dem ersten Luftkühler können das erste Element der Schiebesitz-Zapfenverbindung und das erste Element der Schnappverbindung fest integriert sein. Bei dem zweiten Luftkühler können das zweite Element der Schiebesitz-Zapfenverbindung und das zweite Element der Schnappverbindung fest integriert sein. Hierdurch können zusätzliche Bauteile entfallen. Dadurch kann sich eine kostengünstige Kühlervorrichtung realisieren lassen.

Weiterhin umfasst die Erfindung auch ein Verfahren zur Herstellung einer Kühlervorrichtung für ein Fahrzeug, das die folgenden Schritte umfasst:
Bereitstellen eines ersten Luftkühlers mit einem ersten Element einer Schiebesitz-Zapfenverbindung und einem ersten Element einer Schnappverbindung; und
Bereitstellen eines zweiten Luftkühlers mit einem zweiten Element der Schiebesitz-Zapfenverbindung und einem zweiten Element der Schnappverbindung, wobei die Elemente der Schnappverbindung und die Elemente der Schiebesitz-Zapfenverbindung derart ausgebildet sind, dass durch die Schnappverbindung und die Schiebesitz-Zapfenverbindung eine formschlüssige Verbindung der zwei Luftkühler herstellbar ist;
Bewegen der beiden Luftkühler, um die beiden Elemente der Schiebesitz-Zapfenverbindung schräg ineinander zu schieben, wobei sich eine Drehachse in der Schiebesitz-Zapfenverbindung ergibt;
Beiklappen der beiden Luftkühler um die Drehachse In der Schiebesitz-Zapfenverbindung, um die beiden Elemente der Schnappverbindung zu der Schnappverbindung zusammenzufügen, um eine formschlüssige Verbindung der beiden Luftkühler herzustellen.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung eines Ladeluftkühlers;
- Fig. 2: eine Darstellung einer rückwärtigen Ansicht des in Fig. 1 gezeigten Ladeluftkühlers;
- Fig. 3: eine Darstellung einer erfindungsgemäßen Kühlvorrichtung im zusammengebauten Zustand;
- Fig. 4: eine Darstellung der in Fig. 3 gezeigten erfindungsgemäßen Kühlvorrichtung im noch nicht zusammengebauten Zustand;
- Figuren 5 bis 12: Detailansichten der in Fig. 3 gezeigten erfindungsgemäßen Kühlvorrichtung;
- Fig. 13: eine Darstellung eines Verfahrensschritts zum Herstellen einer in Fig.3 gezeigten erfindungsgemäßen Kühlvorrichtung;
- Fig. 14: eine Darstellung eines weiteren Verfahrensschritts zum Herstellen einer erfindungsgemäßen Kühlvorrichtung;
- Figuren 15 und 16: Detailansichten der Schnappverbindung der in Figuren 13 und 14 gezeigten Verfahrensschritte zur Herstellung einer erfindungsgemäßen Kühlvorrichtung;
- Fig. 17: eine Darstellung einer weiteren erfindungsgemäßen Kühlvorrichtung im zusammengebauten Zustand;
- Fig. 18: eine Darstellung der in Fig. 17 gezeigten erfindungsgemäßen Kühlvorrichtung im demontierten Zustand;
- Figuren 19 bis 26: Detailansichten der in Fig. 17 gezeigten erfindungsgemäßen Kühlvorrichtung;
- Fig. 27: eine Darstellung eines Verfahrensschritts zum Herstellen einer in Fig. 17 gezeigten erfindungsgemäßen Kühlvorrichtung;
- Fig. 28: Detailansicht der Schiebesitz-Zapfenverbindung des in Figur 27 gezeigten Verfahrensschritts zur Herstellung einer erfindungsgemäßen Kühlvorrichtung;
- Fig. 29: Detailansicht der Schnappverbindung des in Figur 27 gezeigten Verfahrensschritts zur Herstellung einer erfindungsgemäßen Kühlvorrichtung;
- Fig. 30: Detailansicht der Schiebesitz-Zapfenverbindung des in Figur 27 gezeigten Verfahrensschritts zur Herstellung einer erfindungsgemäßen Kühlvorrichtung; und
- Fig. 31: Detailansicht der Schnappverbindung des in Figur 27 gezeigten Verfahrensschritts zur Herstellung einer erfindungsgemäßen Kühlvorrichtung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

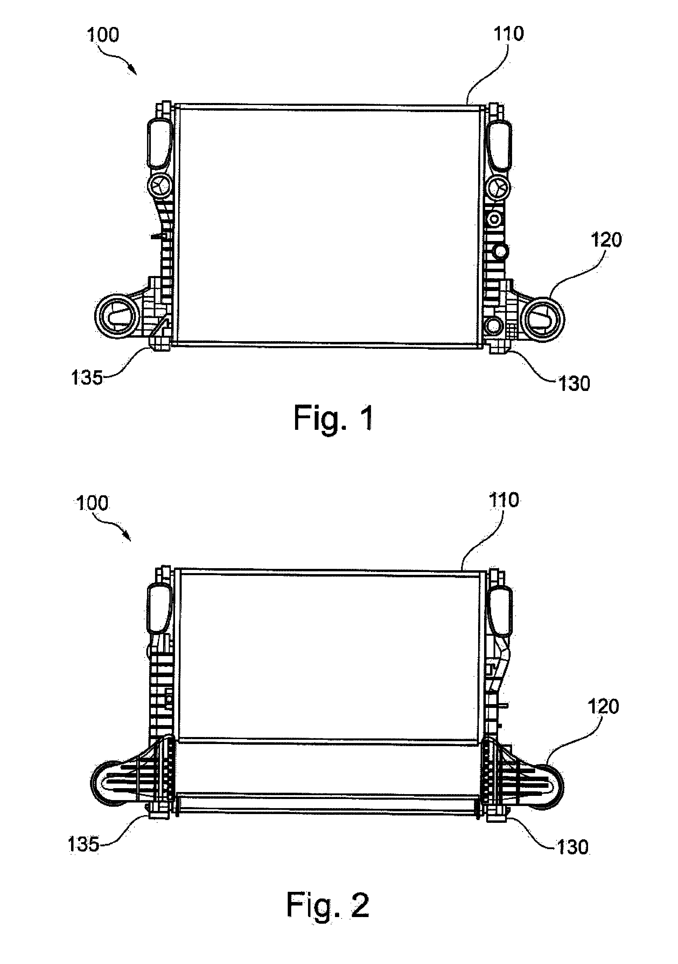

Fig. 1 zeigt eine Kühlvorrichtung 100. Die Kühlvorrichtung 100 weist einen Kühlmittel-Luftkühler 110 und einen Ladeluft-Luftkühler 120 auf. An einer Seite des Kühlmittel-Luftkühlers 110 schließt ein Modullager 130 an. Auf der dem Modullager 130 gegenüberliegenden Seite des Kühlmittel-Luftkühlers 110 schließt ein weiteres Modullager 135 an. Der Ladeluft-Luftkühler 120 ist unmittelbar an den Modullagern 130, 135 fixiert.

Fig. 2 zeigt die in Fig. 1 gezeigte Kühlvorrichtung 100 in der rückwärtigen Ansicht. Gezeigt ist die Kühlvorrichtung 100 mit dem Kühlmittel-Luftkühler 110, dem Ladeluft-Luftkühler 120 und den Modullagern 130, 135.

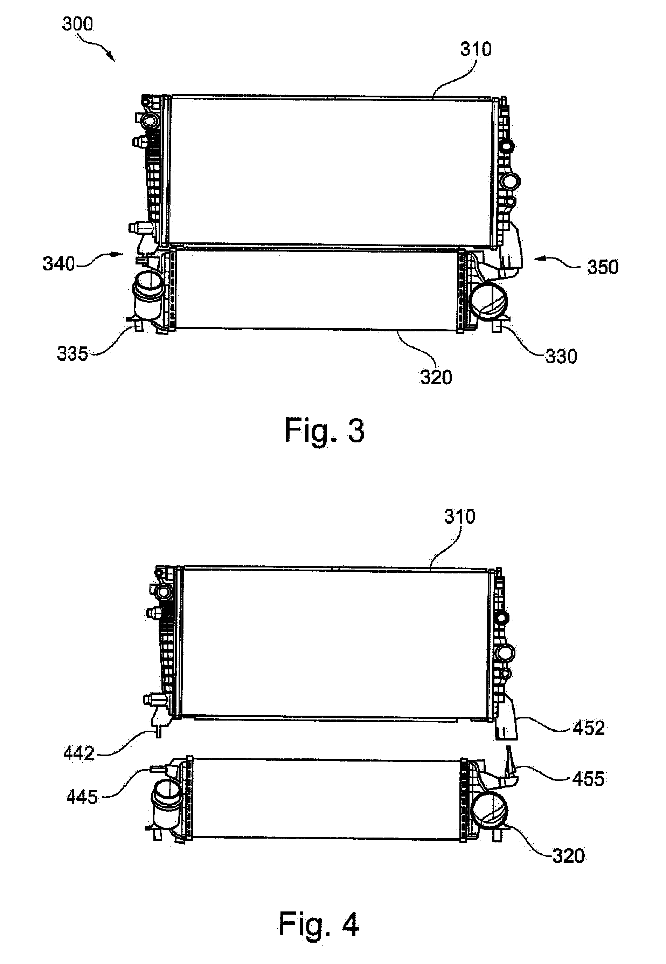

Fig. 3 zeigt eine Darstellung einer Kühlvorrichtung 300 gemäß einem Ausführungsbeispiel der vorliegenden Erfindung. Die Kühlvorrichtung 300 weist einen Kühlmittel-Luftkühler 310 und einen Ladeluft-Luftkühler 320 auf. Der Kühlmittel-Luftkühler 310 ist formschlüssig mit dem Ladeluft-Luftkühler 320 verbunden. Die Luftkühler weisen jeweils ein Wärmeübertragungselement auf. Die Verbindung der beiden Luftkühler 310, 320 wird über eine Schiebesitz-Zapfenverbindung 340 und eine Schnappverbindung 350 realisiert. An einer Seite des Kühlmittel-Luftkühlers 310 schließt ein Modullager 330 an. Auf der dem Modullager 330 gegenüberliegenden Seite des Kühlmittel-Luftkühlers 310 schließt ein weiteres Modullager 335 an. Die Modullager 330, 335 sind jeweils an einem lateralen Ende eines Sammlers angeordnet. Die Schiebesitz-Zapfenverbindung 340 ist an der Seite der Luftkühler 310, 320 außerhalb des Wärmeübertragungselements angeordnet. Die Schnappverbindung 350 ist an der der Schiebesitz-Zapfenverbindung gegenüberliegenden Seite der Luftkühler 310, 320 außerhalb des Wärmeübertragungselements angeordnet.

Die Kühlvorrichtung 300 ist im montierten Zustand dargestellt.

Fig. 4 zeigt die in Fig. 3 gezeigte Kühlvorrichtung 300 gemäß einem Ausführungsbeispiel der vorliegenden Erfindung im demontierten Zustand. Die beiden Luftkühler 310, 320 sind beabstandet zueinander angeordnet. Die Schiebesitz-Zapfenverbindung 340 ist gelöst. Die Schiebesitz-Zapfenverbindung 340 besteht aus zwei Elementen. Das eine Element der Schiebesitz-Zapfenverbindung 340 ist an der Seite des Ladeluft-Luftkühlers 320 angeordnet und ist als ein Zapfen 445 ausgebildet. Das andere Element der Schiebesitz-Zapfenverbindung 340 ist an der Seite des Kühlmittel-Luftkühlers 310 angeordnet und ist als ein Schiebesitz 442 für den Zapfen 445 ausgebildet. Die Schnappverbindung 350 besteht aus zwei Elementen. Das eine Element der Schnappverbindung 350 ist an der Seite des Ladeluft-Luftkühlers 320 angeordnet und ist als ein Schnapphaken 455 ausgebildet. Das andere Element der Schnappverbindung 350 ist an der Seite des Kühlmittel-Luftkühlers 310 positioniert und ist als eine Schnapphaken-Aufnahme 452 für den Schnapphaken 455 ausgebildet.

Der Ladeluft-Luftkühler 310 wird auf einer Seite, in Fig. 4 der linken Seite, formschlüssig in einem Schiebesitz 442, auch bezeichnet als Loslager quer zur Fahrtrichtung positioniert, aufgenommen. Vertikal wird der Ladefuft-Luftkühler 320 auf dieser Seite leicht verspannt. Genauer gesagt wird die Schiebesitz-Zapfenverbindung in sich verspannt. Auf der in Fig. 4 rechten Seite wird der Ladeluft-Luftkühler 320 formschlüssig in Fahrtrichtung und quer zur Fahrtrichtung aufgenommen. Vertikal wird der Ladeluft-Luftkühler 320 mit einem Schnapphaken 455 fixiert.

In diesem Ausführungsbelspiel werden die Befestigungselemte 442, 445, 452, 455 in den Kunststoffkästen der Lüfter 310, 320 integriert.

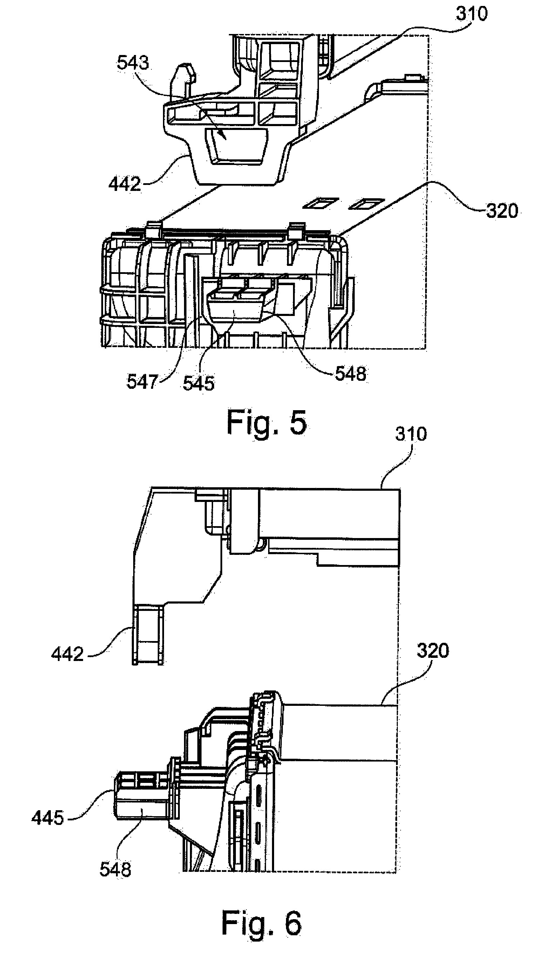

Fig. 5 zeigt eine Detailansicht der Schiebesitz-Zapfenverbindung der in Fig. 3 gezeigten Kühlvorrichtung 300 gemäß einem Ausführungsbeispiel der vorliegenden Erfindung im demontierten Zustand. Die beiden Luftkühler 310, 320 sind beabstandet angeordnet. Der Zapfen 445 ist rechteckig ausgeformt mit zwei seitlichen Fasen 547, 548 an sich gegenüberliegenden Seiten. Eine Schiebesitz-Aufnahme 543 im Schiebesitz 442 ist derart ausgeformt, dass eine formschlüssige Aufnahme des Zapfens 445 ermöglicht wird. Die Schiebesitz-Aufnahme 543 ist als ein Durchgangsloch in dem Schiebesitz 442 realisiert.

Durch die seitlichen Fasen 547, 548 an dem rechteckigen Zapfen 545 erhält man beim Fügen ein gewisses Montagespiel.

Fig. 6 zeigt eine Detailseitenansicht der Schiebesitz-Zapfenverbindung der in Fig. 3 gezeigten Kühlvorrichtung 300 gemäß einem Ausführungsbeispiel der vorliegenden Erfindung im demontierten Zustand. Dargestellt ist die seitliche Fase 548 an dem Zapfen 445.

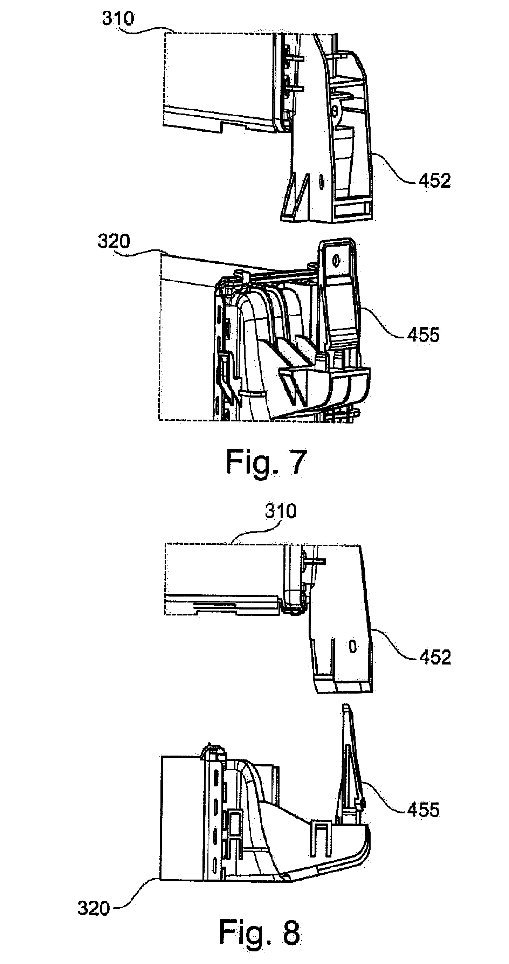

Fig. 7 zeigt eine Detailansicht der Schnappverbindung der in Fig. 3 gezeigten Kühlvorrichtung 300 gemäß einem Ausführungsbeispiel der vorliegenden Erfindung im demontierten Zustand. Die beiden Luftkühler 310, 320 sind beabstandet angeordnet. Gezeigt sind der Schnapphaken 455 und die Schnapphaken-Aufnahme 452.

Der Schnapphaken 455 am Ladeluft-Luftkühler 320 rechts in Fahrtrichtung positioniert ist derart ausgeformt, dass er auf Druck belastet wird.

Fig. 8 zeigt eine weitere Detailseitenansicht der in Fig. 7 gezeigten Schnappverbindung bestehend aus Schnapphaken 455 und Schnapphaken-Aufnahme 452 gemäß einem Ausführungsbeispiel der vorliegenden Erfindung im demontierten Zustand.

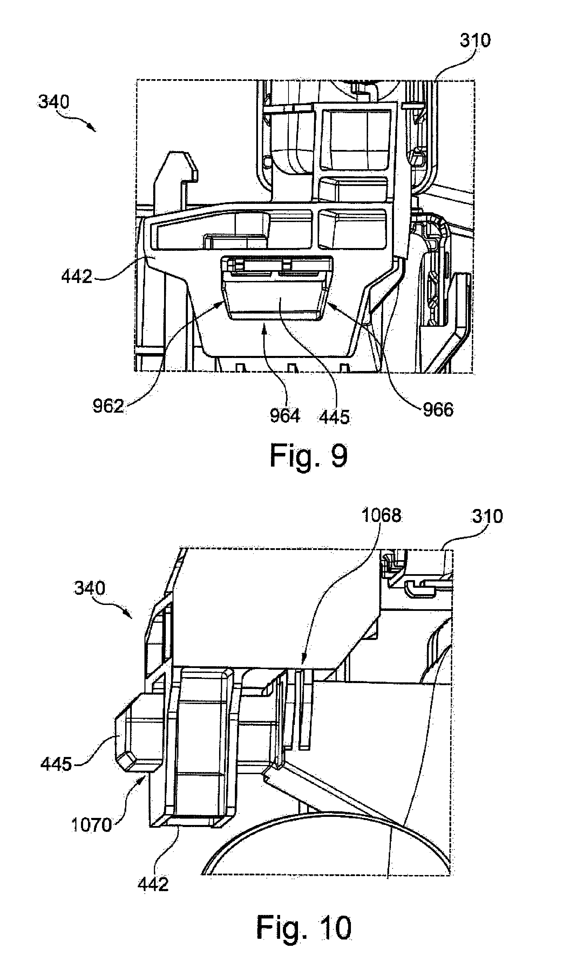

Fig. 9 zeigt eine Detailansicht der in Fig. 3 gezeigten Schiebesitz-Zapfenverbindung 340 gemäß einem Ausführungsbelspiel der vorliegenden Erfindung im montierten Zustand. Der Schiebesitz 442 und der Zapfen 445 sind derart ausgeformt, dass zwischen beiden Elementen 442, 445 der Schiebesitz-Zapfenverbindung 340 im montierten Zustand sich Kontaktflächen 962, 964, 966 ergeben. Die Kontaktflächen 962, 964, 966 ergeben sich zwischen den Außenwänden des Zapfens 445 und den Innenwänden der Schiebesitz-Aufnahme 442. Als eine Kontaktfläche wird hier die Fläche bezeichnet, an der zwei Körperflächen sich berühren.

Fig. 10 zeigt eine Detailansicht der in Fig. 3 gezeigten Schiebesitz-Zapfenverbindung 340 gemäß einem Ausführungsbeispiel der vorliegenden Erfindung im montierten Zustand. Der Schiebesitz 442 und der Zapfen 445 sind derart ausgeformt, dass sich zur Montage zwischen den beiden Elementen 442, 445 eine Schiebesitz-Passung 1070 ergibt. Im montierten Zustand entsteht eine Kontaktfläche 1068, die im montierten Zustand leicht verspannt ist

Beim Beiklappen liegen dann die Flanken von dem Zapfen 445 und die Aufnahme 442 am Kühlmittel-Luftkühler 310 aufeinander. Der Zapfen 445 wird durch eine weitere Kontaktfläche 1068 leicht vertikal verspannt.

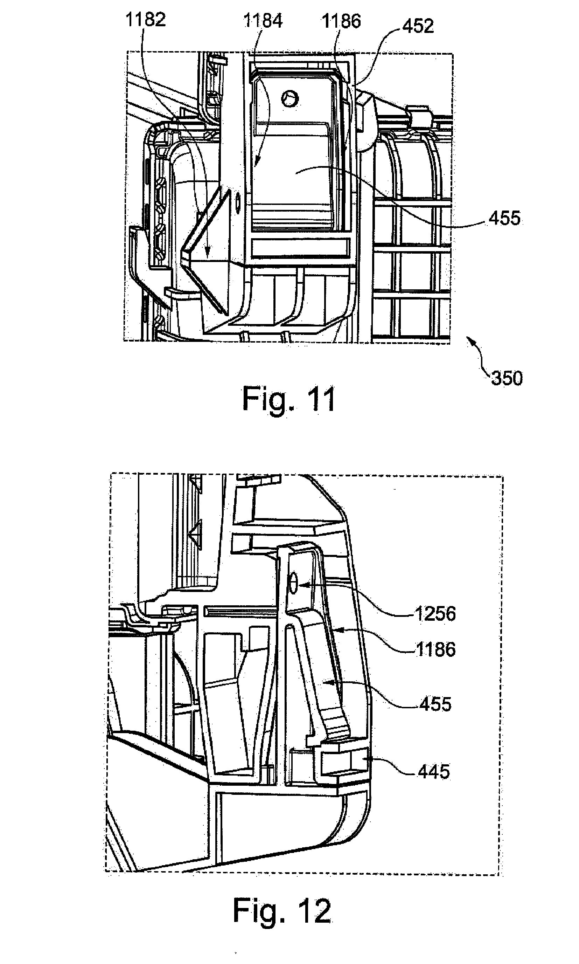

Fig. 11 zeigt eine Detailansicht der in Fig. 3 gezeigten Schnappverbindung 350 gemäß einem Ausführungsbeispiel der vorliegenden Erfindung im montierten Zustand. Zwischen dem Schnapphaken 455 und der Schnapphaken-Aufnahme 452 entstehen eine untere Kontaktfläche 1182 und seitliche Kontaktflächen 1184, 1186.

Fig. 12 zeigt eine Detailansicht im Schnitt der in Fig. 3 gezeigten Schnappverbindung 350 gemäß einem Ausführungsbeispiel der vorliegenden Erfindung im montierten Zustand. Der Schnapphaken 455 rastet in der Schnapphaken-Aufnahme 452 ein. Im Schnapphaken 455 ist ein Schraubloch 1256 vorgesehen.

Der Schnapphaken 455 wird auf Druck belastet. Mittels der Kontaktflächen 1182, 1184, 1186 wird der Schnapphaken 455 umlaufend formschlüssig fixiert. Als Rückfalllösung kann der Ladeluft-Luftkuhler 320 am Kühlmittel-Luftkühler 310 mittels des Schraublochs 1256 verschraubt werden.

Auf der in Fig. 12 rechten Seite wird der Ladeluft-Luftkühler 320 formschlüssig in Fahrtrichtung und quer zur Fahrichtung aufgenommen. Vertikal wird der Ladeluft-Luftkühler mit einem Schnapphaken 455 fixiert. Der Schnapphaken 455 wird auf Druck belastet. In einem weiteren hier nicht gezeigten Ausführungsbeispiel kann der Schnapphaken 455 auf Zug belastet werden.

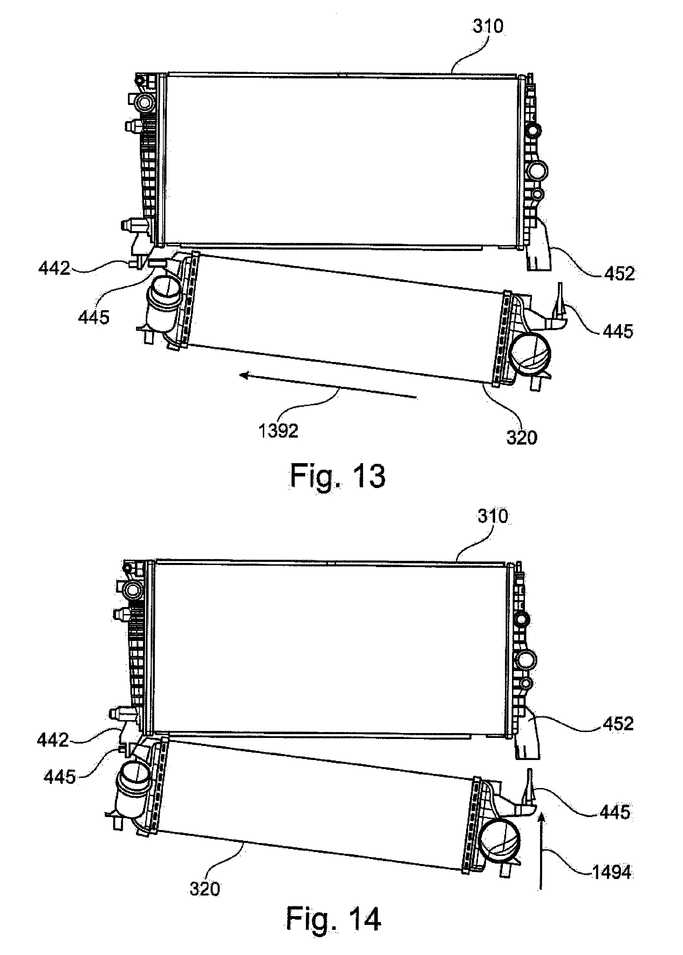

Fig. 13 zeigt die in Fig. 3 gezeigte Kühlvorrichtung 300 gemäß einem Ausführungsbeispiel der vorliegenden Erfindung im demontieren Zustand. Die beiden Luftkühler 310, 320 sind beabstandet angeordnet. Die Schiebesitz-Zapfenverbindung 340 und die Schnappverbindung 350 sind gelöst.

In einem Schritt zum Herstellen der Kühlvorrichtung 300 wird der Ladeluft-Luftkühler auf der Seite der Schiebesitz-Zapfenverbindung 340 schräg in Bezug zum Kühlmittel-Luftkühler 310 in den Schiebesitz 442 am Kühlmittel-Luftkühler 310 eingesteckt, in Bewegungsrichtung der Schiebesitz-Zapfenverbindung-Montage 1392. Durch die seitlichen Fasen an dem rechteckigen Zapfen 445 lässt sich ein gewisses Montagespiel erhalten.

Fig. 14 zeigt die in Fig. 13 gezeigte Kühlvorrichtung 300 gemäß einem Ausführungsbeispiel der vorliegenden Erfindung im Zustand während der Montage. Der Zapfen 445 ist bereits in den Schiebesitz 441 eingeschoben. Die Schnappverbindung 350 ist gelöst.

In dieser Position kann der Ladeluft-Luftkühler hochgeklappt werden.

Der Ladeluft-Luftkühler 320 wird, in Fig. 14 auf der linken Seite dargestellt, formschlüssig in einem Schiebesitz 442 (Loslager quer zur Fahrtrichtung) aufgenommen. Vertikal wird der Ladeluft-Luftkühler 320 auf dieser Seite leicht verspannt. Auf der rechten Seite wird der Ladeluft-Luftkühler 320 formschlüssig in Fahrtrichtung und quer zur Fahrtrichtung aufgenommen. Vertikal wird der Ladeluft-Luftkühler 320 mit einem Schnapphaken 455 fixiert.

Der Ladeluft-Luftkühler 320 wird, in Fig. 14 links dargestellt, in die Aufnahme 342 am Kühlmittel-Luftkühler 310 eingeschoben und auf der in Fig. 14 rechten Seite in Bewegungsrichtung der Schnappverbindung-Montage 1494 hochgeklappt und mit dem Schnapphaken 455 fixiert.

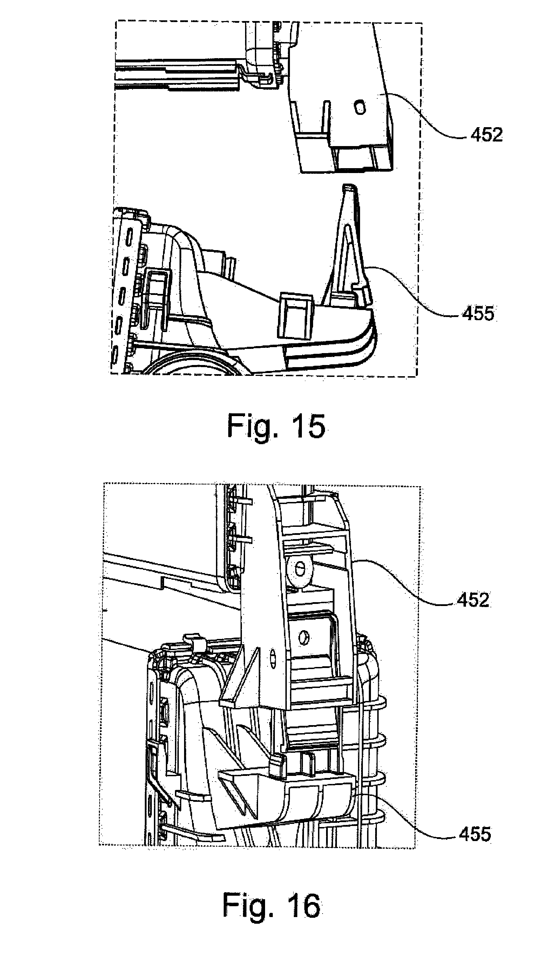

Fig. 15 zeigt die in Fig. 3 gezeigte Schnappverbindung 350 der Kühlvorrichtung 300 gemäß einem Ausführungsbeispiel der vorliegenden Erfindung im demontierten Zustand. Die Schnappverbindung 350 ist gelöst.

Fig. 16 zeigt die in Fig. 3 gezeigte Schnappverbindung 350 der Kühlvorrichtung 300 gemäß einem Ausführungsbeispiel der vorliegenden Erfindung im halb montierten Zustand.

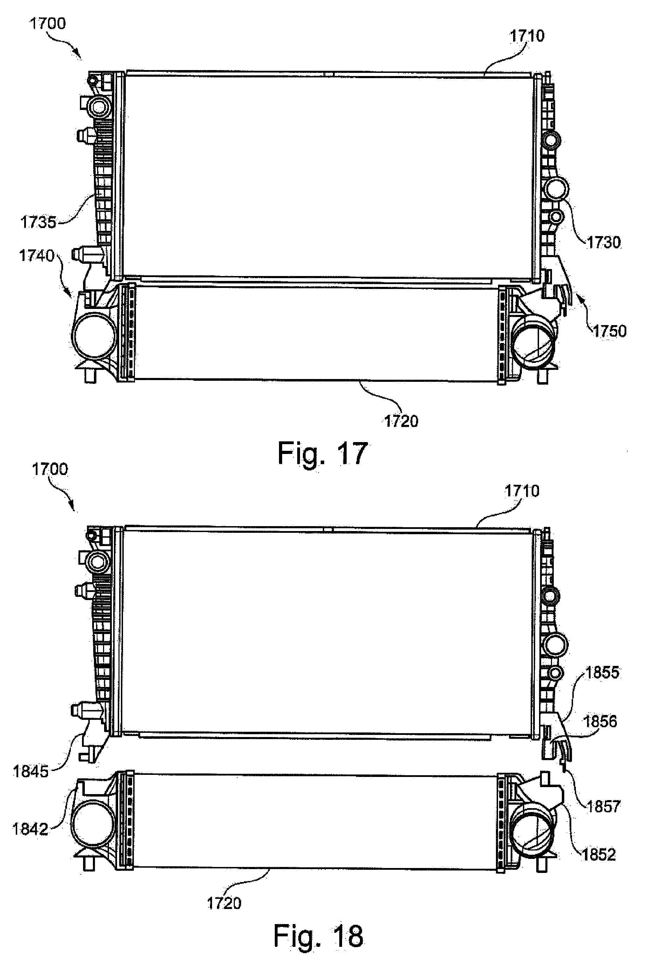

Fig. 17 zeigt eine Darstellung einer Kühlvorrichtung 1700 gemäß einem weiteren Ausführungsbeispiel der vorliegenden Erfindung. Die Kühlvorrichtung 1700 weist einen Kühlmittel-Luftkühler 1710 und einen Ladeluft-Luftkühler 1720 auf. Der Kühlmittel-Luftkühler 1710 ist formschlüssig mit dem Ladeluft-Luftkühler 1720 verbunden. Die Luftkühler weisen jeweils ein Wärmeübertragungselement auf. Die Verbindung der beiden Luftkühler 1710, 1720 wird über eine Schiebesitz-Zapfenverbindung 1.740 und eine Schnappverbindung 1750 realisiert. Die Schiebesitz-Zapfenverbindung 1740 ist an der Seite der Luftkühler 1710, 1720 außerhalb des Wärmeübertragungselements positioniert. Die Schnappverbindung 1750 ist an der der Schiebesitz-Zapfenverbindung gegenüberliegenden Seite der Luftkühler 1710, 1720 außerhalb des Wärmeübertragungselements positioniert.

Die Kühlvorrichtung 1700 ist im montierten Zustand dargestellt.

Fig. 18 zeigt die in Fig. 17 gezeigte Kühlvorrichtung 1700 gemäß einem Ausführungsbeispiel der vorliegenden Erfindung im demontierten Zustand. Die beiden Luftkühler 1710, 1720 sind beabstandet angeordnet. Die Schiebesitz-Zapfenverbindung 1740 ist gelöst. Die Schiebesitz-Zapfenverbindung 1740 besteht aus zwei Elementen. Das eine Element der Schiebesitz-Zapfenverbindung 1740 ist an der Seite des Kühlmittel-Luftkühlers 1710 positioniert und ist als ein Zapfen 1845 ausgebildet. Das andere Element der Schiebesitz Zapfenverbindung 1740 ist an der Seite des Ladeluft-Luftkühlers 1720 positioniert und ist als ein Schiebesitz 1842 für den Zapfen 1845 ausgebildet. Die Schnappverbindung 1750 besteht aus zwei Elementen. Das eine Element der Schnappverbindung 1750 ist an der Seite des Kühlmittel-Luftkühlers 1710 positioniert und ist als ein Schnapphaken 1855 ausgebildet. Das andere Element der Schnappverbindung 1750 ist an der Seite des Ladeluft-Luftkühlers 1720 positioniert und ist als eine Schnapphaken-Aufnahme 1852 für den Schnapphaken 1855 ausgebildet. Der Schnapphaken ist derart ausgeformt, dass eine Führungsnase 1856 und ein Schnappelement 1857 ausgeprägt sind.

Der Ledeluft-Luftkühler 1710 wird auf einer Seite, in Fig. 18 der linken Seite, formschlüssig in einem Schiebesitz 1842 positioniert, aufgenommen. Vertikal wird der Ladeluft-Luftkühler 1720 auf dieser Seite leicht verspannt. Genauer gesagt wird die Schlebesitz-Zapfenverbindung in sich verspannt. Auf der in Fig. 18 rechten Seite wird der Ladeluft-Luftkühler 1720 formschlüssig in Fahrtrichtung und quer zur Fahrtrichtung aufgenommen. Die Positionierung wird durch die Führungsnase 1856 und eine entsprechende Aufnahme für die Führungsnase in der Schnapphaken-Aufnahme 1852 realisiert. Vertikal wird der Ladeluft-Luftkühler 1720 mit einem Schnapphaken 1855 fixiert.

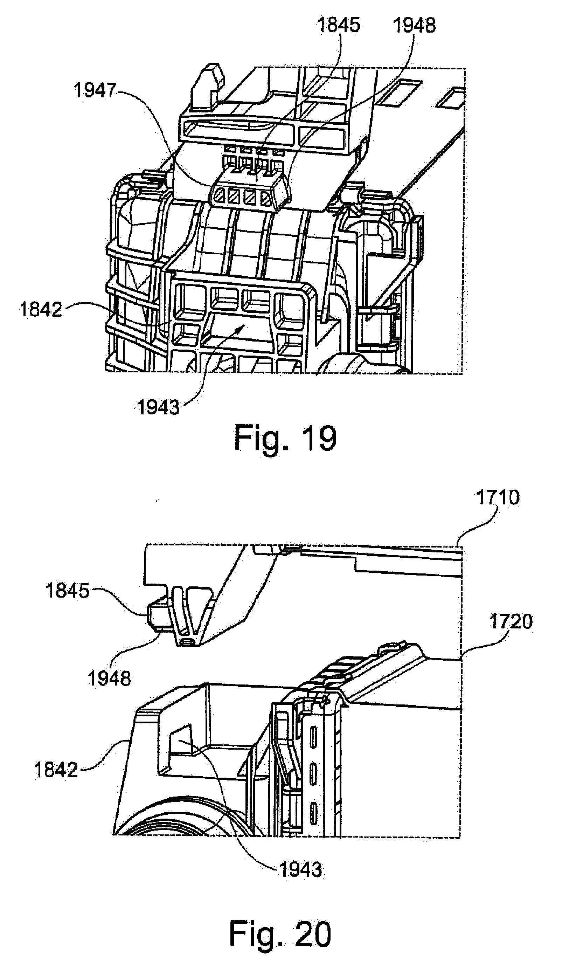

Fig. 19 zeigt eine Detailansicht der Schiebesitz-Zapfenverbindung der in Fig.17 gezeigten Kühlvorrichtung 1700 gemäß einem Ausführungsbeispiel der vorliegenden Erfindung im demontierten Zustand. Die beiden Luftkühler 1710, 1720 sind beabstandet angeordnet: Der Zapfen 1845 ist rechteckig ausgeformt mit zwei seitlichen Fasen 1947, 1948 an sich gegenüberliegenden Seiten. Eine Schiebesitz-Aufnahme 1943 im Schiebesitz 1842 ist derart ausgeformt, dass eine formschlüssige Aufnahme des Zapfens 1845 ermöglicht wird. Die Schiebesitz-Aufnahme 1943 ist als ein Durchgangsloch in dem Schiebesitz 1842 realisiert.

Fig. 20 zeigt eine Detailseitenanstcht der Schiebesitz-Zapfenverbindung der in Fig, 17 gezeigten Kühlvorrichtung 1700 gemäß einem Ausführungsbeispiel der vorliegenden Erfindung im demontierten Zustand. Dargestellt ist die seitliche Fase 1948 an dem Zapfen 1845.

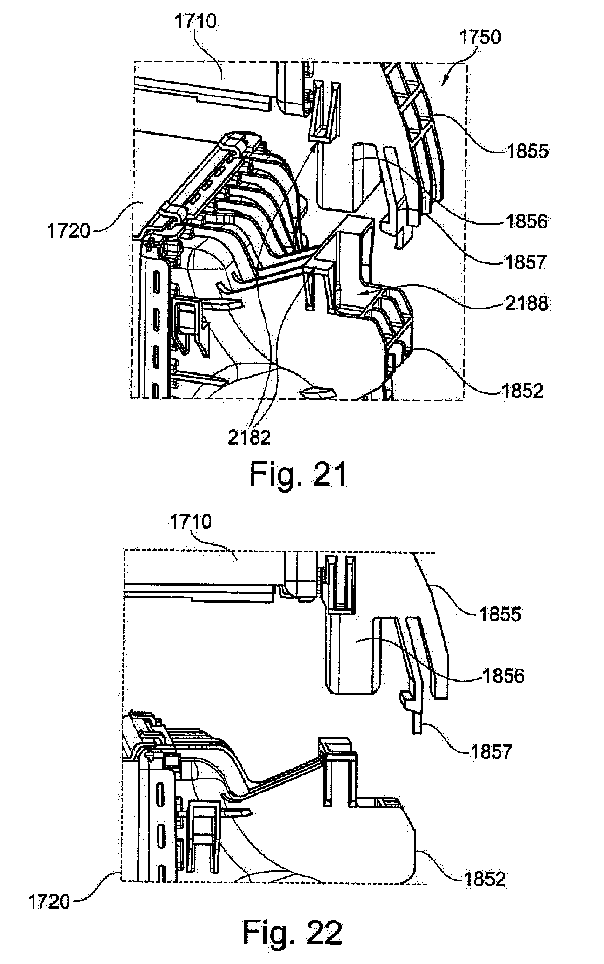

Fig. 21 zeigt eine Detailansicht der Schnappverbindung der in Fig. 17 gezeigten Kühlvorrichtung 17300 gemäß einem Ausführungsbeispiel der vorliegenden Erfindung im demontierten Zustand. Die beiden Luftkühler 1710, 1720 sind beabstandet angeordnet. Gezeigt sind der Schnapphaken 1855 und die Schnapphaken-Aufnahme 1852. Der Schnapphaken 1855 weist als Merkmale in diesem Ausführungsbeispiel eine Führungsnase 1856 und ein Schnappelement 1857 auf. Die Schnapphaken-Aufnahme 1852 ist derart ausgeprägt, dass eine Aussparung 2188 die formschlüssige Aufnahme der Führungsnase 1856 erlaubt.

Der Schnapphaken 1855 am Kühlmittel-Luftkühler 1710 rechts in Fahrtrichtung positioniert ist derart ausgeformt, dass er auf Zug belastet wird.

Fig. 22 zeigt eine weitere Detallseitenansicht der in Fig. 21 gezeigten Schnappverbindung bestehend aus Schnapphaken 1855 und Schnapphaken-Aufnahme 1852 gemäß einem Ausführungsbeispiel der vorliegenden Erfindung im demontierten Zustand.

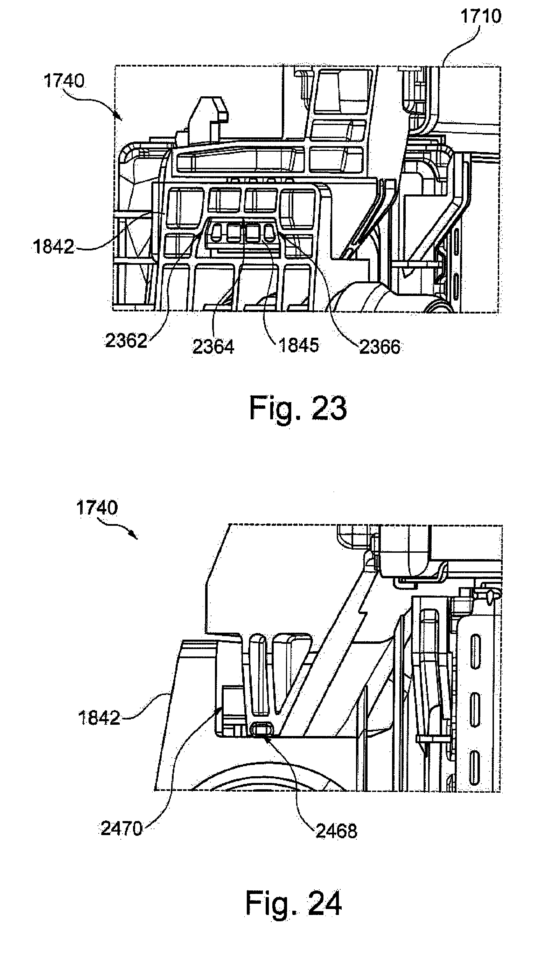

Fig. 23 zeigt eine Detailansicht der in Fig. 17 gezeigten Schiebesitz-Zapfenverbindung 1740 gemäß einem Ausführungsbeispiel der vorliegenden Erfindung im montierten Zustand. Der Schiebesitz 1842 und der Zapfen 1845 sind derart ausgeformt, dass zwischen beiden Elementen 1842, 1845 der Schiebesitz-Zapfenverbindung 1740 im montierten Zustand sich Kontaktflächen 2362, 2364, 2366 ergeben. Die Kontaktflächen 2362, 2364, 2366 ergeben sich zwischen den Außenwänden des Zapfens 1845 und den Innenwänden der Schiebesitz-Aufnahme 1842. Als eine Kontaktfläche wird hier die Fläche bezeichnet, an der zwei Körperflächen sich berühren.

Fig. 24 zeigt eine Seitenansicht der in Fig. 23 gezeigten Detailansicht der Schiebesitz-Zapfenverbindung 1740 gemäß einem Ausführungsbeispiel der vorliegenden Erfindung im montierten Zustand. Der Schiebesitz 1842 und der Zapfen 1845 sind derart ausgeformt, dass sich zur Montage zwischen den beiden Elementen 1842, 1845 eine Schiebesitz-Passung 2470 ergibt. Im montierten Zustand entsteht eine Kontaktfläche 2468, die im montierten Zustand leicht verspannt ist.

Im montierten Zustand ist in dem in Fig.. 24 gezeigten Ausführungsbeispiel der Schiebesitz 2470 quer zur Fahrtrichtung positioniert.

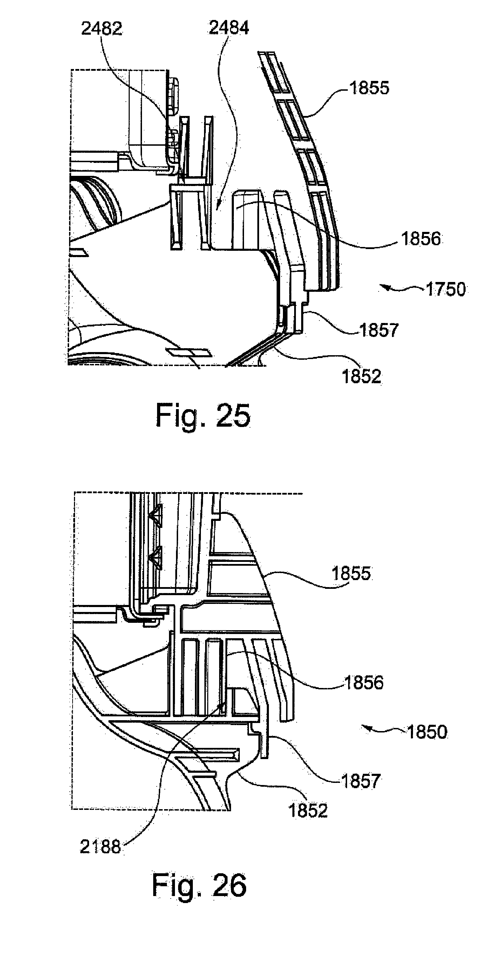

Fig. 25 zeigt eine Detailansicht der in Fig. 17 gezeigten Schnappverbindung 1750 gemäß einem Ausführungsbeispiel der vorliegenden Erfindung im montierten Zustand. Zwischen dem Schnapphaken 1855 und der Schnapphaken-Aufnahme 1852 entstehen eine in Fig. 25 horizontal dargestellte Kontaktfläche 2182 und eine vertikal dargestellte Kontaktfläche 2584. Die Kontaktfläche 2584 wird auch als seitliche Kontaktfläche bezeichnet. Es entsteht noch eine weitere in Fig. 25 nicht dargestellte seitliche Kontaktfläche, die auf der der Kontaktfläche 2584 gegenüberliegenden Seite der Führungsnase 1856 entsteht. Die Kontaktflächen stellen eine sichere und genaue Positionierung für die formschlüssige Verbindung der beiden Kühler 1710, 1720 sicher.

Fig. 26 zeigt eine Detailansicht im Schnitt der in Fig. 17 gezeigten Schnappverbindung 1750 gemäß einem Ausführungsbeispiel der vorliegenden Erfindung im montierten Zustand. Das Schnappelement 1857 des Schnapphakens 1855 rastet in der Schnapphaken-Aufnahme 1852 ein.

Der Sclinapphaken 1855 kann bei der Demontage von unten gelöst werden. Der Schnapphaken 1855 wird auf Zug belastet. Im unteren Bereich wird der Schnapphaken 1855 Mittels der in Fig.26 nicht explizit dargestellten Kontaktflächen 2182, 2184 und der der Kontaktfläche 2184 an der Führungsnase 1856 gegenüberliegenden Seite befindlichen Kontaktfläche umlaufend in der Aussparung 2188 formschlüssig fixiert.

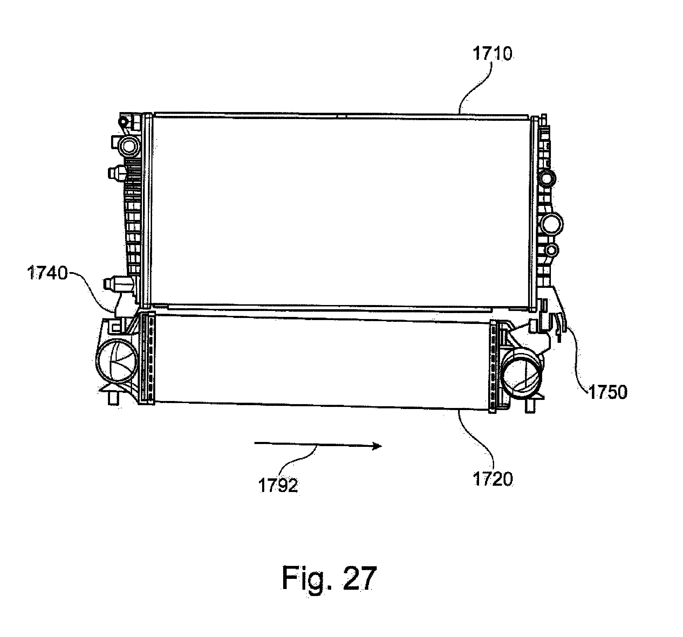

Fig. 27 zeigt die in Fig, 17 gezeigte Kühlvorrichtung 1700 gemäß einem Ausführungsbeispiel der vorliegenden Erfindung im demontierten Zustand. Die beiden Luftkühler 1710, 1720 sind beabstandet angeordnet. Die Schiebesitz-Zapfenverbindung 1740 und die Schnappverbindung 1750 sind gelöst.

In einem Schritt zum Herstellen der Kühlvorrichtung 1700 wird der Ladeluft-Luftkühler auf der Seite der Schlebesitz-Zapfenverbindung 1740 schräg in Bezug zum Kühlmittel-Luftkühler 1710 in den Zapfen 1845 am Kühlmittel-Luftkühler 1710 eingesteckt. In Fig. 27 ist die Bewegungsrichtung der Schiebesitz-Zapfenverbindung-Montage 2792, d.h. die Bewegungsrichtung des Ladeluft-Luftkühlers 1720, von links nach rechts dargestellt. Durch die seitlichen Fasen an dem rechteckigen Zapfen 1845 lässt sich ein gewisses Montagespiel erhalten.

Das in Fig. 27 dargestellte Ausführungsbeispiel der vorliegenden Erfindung kann im Fahrzeug demontiert werden. Das Ausführungsbeispiel benötigt wenig Freigang.

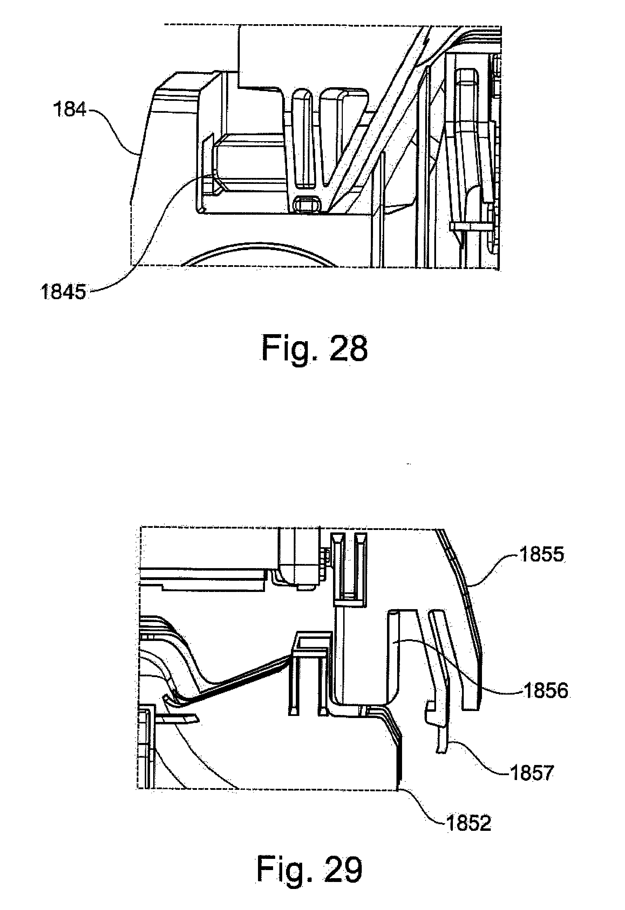

Fig. 28 zeigt die in Fig. 17 gezeigte Kühlvorrichtung 1700 gemäß einem Ausführungsbeispiel der vorliegenden Erfindung im demontierten Zustand. Die Schiebesitz-Zapfenverbindung 1740 ist gelöst.

Zur Montage und Demontage wird nur wenig Bauraum benötigt. Die Demontage kann im Fahrzeug in der Zuluftführung durchgeführt werden.

Fig. 29 zeigt die in Fig. 17 gezeigte Kühlvorrichtung 1700 gemäß einem Ausführungsbeispiel der vorliegenden Erfindung im demontierten Zustand. Die Schnappverbindung 1850 ist gelöst.

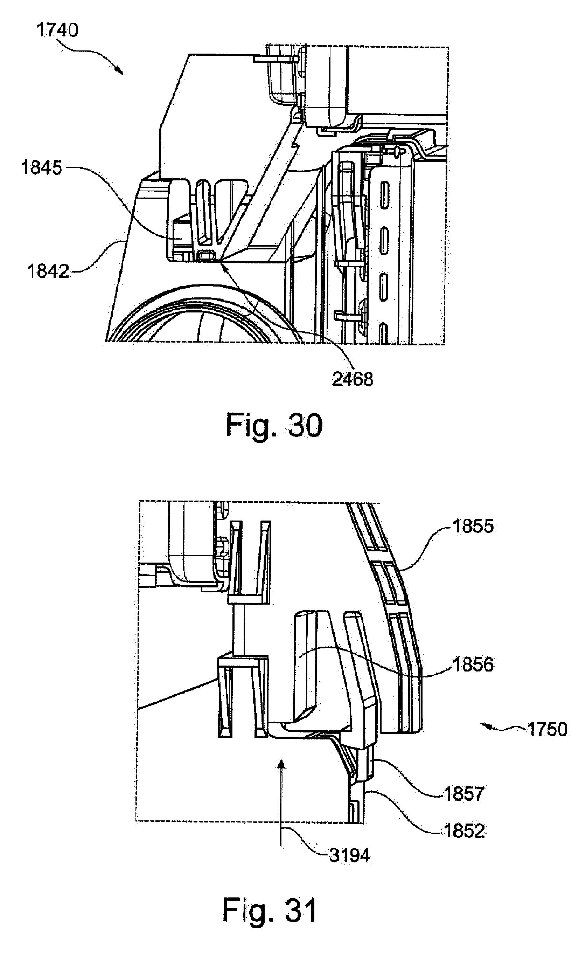

Fig. 30 zeigt die in Fig. 17 gezeigte Kühlvorrichtung 1700 gemäß einem Ausführungsbeispiel der vorliegenden Erfindung im Zustand während der Montage oder Demontage. Die Schiebesitz-Zapfenverbindung 1740 ist geschlossen, aber noch nicht verspannt. Es ergibt sich bereits die Kontaktfläche 2468 ist zwischen dem Zapfen 1845 und dem Schnapphaken 1842.

In dieser Position kann der Ladeluft-Luftkühler 1720 hochgeklappt werden.

Fig. 31 zeigt die in Fig. 17 gezeigte Kühlvorrichtung 1700 gemäß einem Ausführungsbeispiel der vorliegenden Erfindung im demontierten Zustand. Die Schnappverbindung 1850 ist gelöst. Die Führungsnase 1856 des Schnapphakens 1855 befindet sich bereits in einer entsprechenden Aufnahme für die Führungsnase in der Schnapphaken-Aufnahme 1852. Das Schnappelement 1857 des Schnapphakens 1855 ist noch nicht in der Schnapphaken-Aufnahme 1852 eingerastet. Die Bewegungsrichtung Schnappverbindung-Montage 3194 ist in Fig. 31 von unten nach oben dargestellt.

In dieser Position kann der Ladeluft-Luftkühler 1720 hochgeklappt werden.

Die beschriebenen Ausführungsbeispiele sind nur beispielhaft gewählt und können miteinander kombiniert werden.

### Bezugszeichenliste

- 100: Kühlvorrichtung
- 110: Kühlmittel-Luftkühler
- 120: Ladeluft-Luftkühler
- 130: Modullager
- 135: Modullager

- 300: Kühlvorrichtung
- 310: Kühlmittel-Luftkühler
- 320: Ladeluft-Luftkühler
- 330: Modullager
- 335: Modullager
- 340: Schiebesitz-Zapfenverbindung
- 350: Schnappverbindung

- 442: Schiebesitz
- 445: Zapfen
- 452: Schnapphaken-Aufnahme
- 455: Schnapphaken

- 543: Schiebesitz-Aufnahme
- 547: Fase am Zapfen
- 548: Fase am Zapfen

- 962: Kontaktfläche
- 964: Kontaktfläche
- 966: Kontaktfläche

- 1068: Kontaktfläche
- 1070: Schiebesitz-Passung

- 1182: Untere Kontaktfläche
- 1184: Seitliche Kontaktfläche
- 1186: Seitliche Kontaktfläche

- 1256: Schraubloch

- 1392: Bewegungsrichtung Schiebesitz-Zapfenverbindung-Montage

- 1494: Bewegungsrichtung Schnappverbindung-Montage

- 1700: Kühlvorrichtung
- 1710: Kühlmittel-Luftkühler
- 1720: Ladeluft-Luftkühler
- 1740: Schiebesitz-Zapfenverbindung
- 1750: Schnappverbindung

- 1842: Schiebesitz
- 1845: Zapfen
- 1852: Schnapphaken-Aufnahme
- 1855: Schnapphaken
- 1856: Führungsnase
- 1857: Schnappelement

- 1943: Schiehesitz-Aufnahme
- 1947: Fase am Zapfen
- 1948: Fase am Zapfen

- 2182: Horizontale Kontaktfläche

- 2362: Kontaktfläche
- 2364: Kontaktfläche
- 2366: Kontaktfläche

- 2468: Kontaktfläche
- 2470: Schiebesitz-Passung

- 2584: Seitliche Kontaktfläche

- 2658: Schnappelementschutz

- 2792: Bewegungsrichtung Schiebesitz-Zapfenverbindung-Montage

- 3194: Bewegungsrichtung Schnappverbindung-Montage

## Patentansprüche

1. Kühlervorrichtung (300) für ein Fahrzeug, mit folgenden Merkmalen:
einem ersten Luftkühler (310) mit einem ersten Element einer Schiebesitz-Zapfenverbindung (340) und einem ersten Element einer Schnappverbindung (350); und
einem zweiten Luftkühler (320) mit einem zweiten Element der Schiebesitz-Zapfenverbindung (340) und einem zweiten Element der Schnappverbindung (350), wobei die Elemente der Schnappverbindung (350) und die Elemente der Schwebesitz-Zapfenverbindung (340) derart ausgebildet sind, dass durch die Schnappverbindung (350) und die Schiebesitz-Zapfenverbindung (340) eine formschlüssige Verbindung der zwei Luftkühler (310, 320) herstellbar ist.

2. Kühlervorrichtung gemäß Anspruch 1, bei der eines der Elemente der Schiebesitz-Zapfenverbindung (340) ein Zapfen (445) mit seitlich je einer Fase (547, 548) ist und das andere Element der Schiebesitz-Zapfenverbindung (340) als Schiebesitz (442) für den Zapfen (445) ausgeformt ist.

3. Kühlervorrichtung gemäß einem der vorangegangenen Ansprüche, bei der zumindest einer der beiden Luftkühler (310, 320) derart ausgeformt ist, dass bei der formschlüssigen Verbindung zwischen den beiden Luftkühlern (310, 320) eine Kontaktfläche (1068) zum Verspannen des Zapfens (445) gegenüber dem Schiebesitz (442) entsteht.

4. Kühlervorrichtung gemäß einem der vorangegangenen Ansprüche, bei der eines der Elemente der Schnappverbindung (350) ein Schnapphaken (455; 1855) ist und das andere Element der Schnappverbindung (350) als eine Aufnahme (452) für den Schnapphaken (455; 1855) ausgeformt ist.

5. Kühlervorrichtung gemäß einem der vorangegangenen Ansprüche, bei der der Schnapphaken (455; 1855) ausgebildet ist, um bei der formschlüssigen Verbindung entweder auf Druck oder auf Zug belastet zu werden,

6. Kühlervorrichtung gemäß einem der vorangegangenen Ansprüche, bei der die Schiebesitz-Zapfenverbindung (340) und die Schnapphakenverbindung (350) auf zwei sich gegenüberliegenden Seiten der Kühlervorrichtung (300) angeordnet sind.

7. Kühlervorrichtung gemäß einem der vorangegangenen Ansprüche, bei der der erste Luftkühler als Kühlmittel-Luftkühler (310) und der zweite Luftkühler als Ladeluft-Luftkühler (320) ausgeprägt ist.

8. Kühlervorrichtung gemäß einem der vorangegangenen Ansprüche, bei der die beiden Luftkühler (310, 320) aus Kunststoff beschaffen sind.

9. Kühlervorrichtung gemäß einem der vorangegangenen Ansprüche, bei der bei dem ersten Luftkühler (320) das erste Element der Schiebesitz-Zapfenverbindung (340) und das erste Element der Schnappverbindung (350) fest integriert sind und bei dem zweiten Luftkühler (320) das zweite Element der Schiebesitz-Zapfenverbindung (340) und das zweite Element der Schnappverbindung (350) fest integriert sind.

10. Verfahren zur Herstellung einer Kühlervorrichtung für ein Fahrzeug, das die folgenden Schritte umfasst:
Bereitstellen eines ersten Luftkühlers (310) mit einem ersten Element einer Schiebesitz-Zapfenverbindung (340) und einem ersten Element einer Schnappverbindung (350); und
Bereitstellen eines zweiten Luftkühlers (320) mit einem zweiten Element der Schiebesitz-Zapfenverbindung (340) und einem zweiten Element der Schnappverbindung (350), wobei die Elemente der Schnappverbindung (350) und die Elemente der Schiebesitz-Zapfenverbindung (340) derart ausgebildet sind, dass durch die Schnappverbindung (350) und die Schiebesitz-Zapfenverbindung (340) eine formschlüssige Verbindung der zwei Luftkühler (310, 320) herstellbar ist;
Bewegen der beiden Luftkühler (310, 320), um die beiden Elemente der Schiebesitz-Zapfenverbindung (340) schräg ineinander zu schieben, wobei sich eine Drehachse in der Schiebesitz-Zapfenverbindung (340) ergibt;
Beiklappen der beiden Luftkühler (310, 320) um die Drehachse in der Schiebesitz-Zapfenverbindung (340), um die beiden Elemente der Schnappverbindung zu der Schnappverbindung (350) zusammenzufügen, um eine formschlüssige Verbindung der beiden Luftkühler (310, 320) herzustellen.
